# EUROPÄISCHE PATENTSCHRIFT

(11) **EP 4 141 594 B1**
(45) Veröffentlichungstag und Bekanntmachung des Hinweises auf die Patenterteilung: **30.04.2025**
(21) Anmeldenummer: 21192504.5
(22) Anmeldetag: 23.08.2021
(51) Int. Cl.: G05B 19/418

(54) **FEINGRANULARER ABGLEICH LOKALER ARCHIVE BEI MASTER/MASTER SZENARIEN VON SERVERN EINER TECHNISCHEN ANLAGE**
DETAILED COMPARISON OF LOCAL ARCHIVES IN MASTER/MASTER SCENARIOS OF SERVERS OF A TECHNICAL FACILITY
RÉGLAGE À GRANULARITÉ FINE DES ARCHIVES LOCALES DANS DES SCÉNARIOS MAÎTRE/MAÎTRE DES SERVEURS D'UNE INSTALLATION TECHNIQUE

(43) Veröffentlichungstag der Anmeldung: 01.03.2023
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- EP-A1- 3 637 205
- EP-A1- 3 736 647
- WO-A1-2014/099906

## Beschreibung

Die Erfindung betrifft ein Leitsystem für eine technische Anlage, insbesondere Prozess- oder Fertigungsanlage, das einen ersten Operator Station Server und einen zweiten Operator Station Server aufweist, wobei einer dieser Operator Station Server dazu ausgebildet ist, als Master zu arbeiten und der andere dieser Operator Station Server dazu ausgebildet ist, als Slave zu arbeiten, und wobei der Slave dazu ausgebildet ist, für den Fall, dass der Master ausfällt, die Funktion des Masters zu übernehmen, und wobei auf dem ersten Operator Station Server ein erstes Datenarchiv implementiert ist, und wobei auf dem zweiten Operator Station Server ein zweite Datenarchiv implementiert ist, und wobei der erste Operator Station Server und der zweite Operator Station Server dazu ausgebildet sind, Daten der technischen Anlage zu empfangen und in dem jeweiligen Datenarchiv zu hinterlegen, und wobei der erste Operator Station Server und der zweite Operator Station Server jeweils dazu ausgebildet sind, einen jeweiligen Gesundheitszustand zu ermitteln. Außerdem betrifft die Erfindung die Verwendung eines Leitsystems zum Betrieb einer technischen Anlage und ein Verfahren zum Betreiben eines redundant ausgelegten Leitsystems für eine technische Anlage.

Zur Verbesserung der Verfügbarkeit durch Hardwareausfälle werden in technischen Anlagen, beispielsweise in der Prozessindustrie, Komponenten oftmals redundant ausgelegt. Fällt eine Komponente aus, wird diese unmittelbar durch ihren redundanten Partner ersetzt.

Speziell bei Operator Station Servern eines Leitsystems einer Prozessanlage spielt deren Verfügbarkeit im Kontext der Bedien- und Beobachtbarkeit der Prozessanlage eine entscheidende Rolle. Die Operator Station Server werden in der Regel in einem sogenannten Hot-Standby Modus betrieben - d.h. die Prozessabbilder beider Operator Station Server (Master und Slave) befinden sich stets auf einem aktuellen Stand und werden miteinander abgeglichen.

Sowohl der Master als auch der Slave empfangen von der Automatisierung Wertänderungen. Beim Abgleich vergleicht der Slave die von der Automatisierung erhaltenen Wertänderungen mit den durch den Master M weitergeleiteten Wertänderungen. Stimmen diese überein, schreibt der Slave die Wertänderungen in das Prozessabbild. Fällt der Master aus, kann unmittelbar der Slave (ohne Hochfahren oder Generalabgleich) einspringen (neuer Master) - hierbei werden die noch nicht abgeglichenen Wertänderungen in das Prozessabbild für eine lückenlose Bedienung und Beobachtung / Historie übernommen.

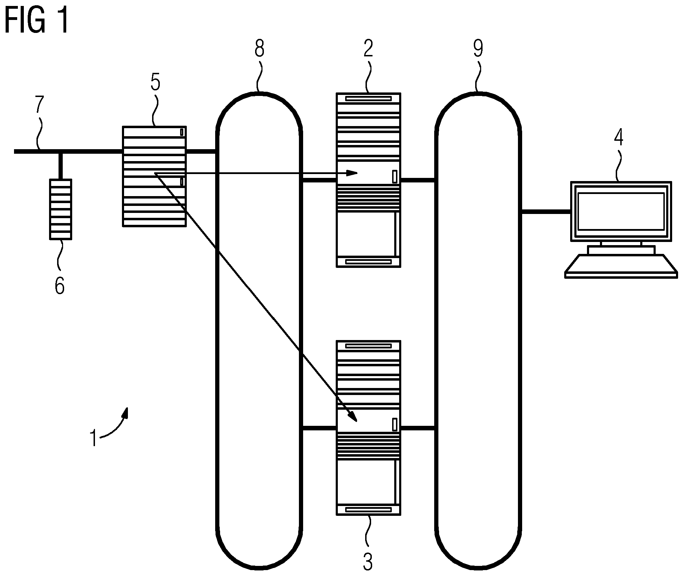

Eine solche, an sich bekannte Konfiguration ist beispielhaft in FIG 1 dargestellt. Ein Leitsystem 1 einer technischen Anlage umfasst einen ersten Operator Station Server 2 und einen zweiten Operator Station Server 3. Zudem umfasst das Leitsystem 1 einen Operator Station Client 4, ein Automatisierungsgerät 5 und ein Peripheriegerät 6. Das Automatisierungsgerät 5 (beispielsweise eine SIMATIC PCS7 S7-400 der Firma SIEMENS) und das Peripheriegerät (beispielsweise ein ET 200 SP der Firma SIEMENS) sind über einen Feldbus 7 miteinander verbunden (der beispielsweise auf PROFIBUS DP basiert). Die beiden Operator Station Server 2, 3 sind mit dem Automatisierungsgerät 5 und miteinander über einen Anlagenbus 8 verbunden. Mit dem Operator Station Client 4 sind die beiden Operator Station Server 2, 3 über einen Terminalbus 9 verbunden. Der Anlagenbus 8 und der Terminalbus 9 können, ohne sich darauf zu beschränken, beispielsweise als Industrial Ethernet ausgebildet sein.

Der erste Operator Station Server 2 und der zweite Operator Station Server 3 sind redundant zueinander ausgelegt. Der erste Operator Station Server 1 agiert als Master und ist für die Archivierung und die Bedienung und Beobachtung durch den Operator Station Client 4 zuständig. Dies bedeutet, dass das Schreiben von Messwerten (z.B. Prozesswerten) durch das Automatisierungsgerät 5 oder das Setzen von Stellwerten durch einen Operatoren nur am Master erfolgt, der dann den Abgleich mit dem zweiten Operator Station Server 4 als Slave vornimmt.

Der Abgleich des ersten Operator Station Servers 2 (als Master) mit dem zweiten Operator Station Server 3 (als Slave) erfolgt, wie in FIG 1 dargestellt) über den (ausfallsicheren und entsprechend leistungsfähigen) Anlagenbus 8. Neben Informationen wie einem Prozessabbild werden auch Statusinformationen zum Gesundheitszustand (Health Index) der beiden Operator Station Server 2, 3 (hier bidirektional) ausgetauscht, um denjenigen Operator Station Server 2, 3 koordiniert zum Master ernennen zu können, welcher den besten Gesundheitszustand hat.

Solange eindeutig ein Master bestimmt werden kann, können Ausfälle oder Teilausfälle eines Operator Station Servers 2, 3 vollständig abgefangen und die Verfügbarkeit der technischen Anlage sichergestellt werden. Treten durch bestimmte Umstände so genannte Master/Master Szenarien ein, so kann die bekannte Konfiguration von redundant ausgelegten Operator Station Servern 2, 3 mit Abgleich über den Anlagenbus 8 (auch bei einer 2-Wege Redundanz) zu den im Folgenden beschriebenen Problemen führen.

Ein Master/Master Szenario kann sich dann einstellen, wenn beide Operator Station Server 2, 3 zueinander den Kontakt verloren haben, weil beispielsweise der Anlagenbus 8 durchtrennt ist oder ein dazwischengeschaltetes (in FIG 1 nicht dargestelltes) Netzwerkgerät oder eine Netzwerkkarte ausgefallen sind. Die Folge dieses Master/Master Szenarios ist, dass gleichzeitig zwei auf den Operator Station Servern 2, 3 implementierte Messarchive unabhängig voneinander mit Messdaten befüllt werden befüllt werden. Es ist bekannt, nach der Wiederherstellung der Redundanz eines der beiden Archive zu verwerfen. In der Regel handelt es sich dabei um das Archiv des nach der Wiederherstellung bestimmten Slaves. Das kann richtig, teilweise richtig oder gänzlich falsch sein - je nachdem, welche zeitlich veränderbaren Störungen sich auf den Operator Station Servern 2, 3 während des Master/Master Szenarios ereignet haben.

Andere Ansätze verfolgen die Langzeitarchivierung beider Archive, was jedoch zu einem enormen Anstieg des Speicherbedarfs führt. Darüber hinaus muss das somit doppelt angelegt Archiv auch wieder bereinigt werden, weil spätestens beim Zugriff auf archivierte Daten (z.B. beim Aufschlag einer Trendanzeige) ein eindeutiger "historischer Faden" vorhanden sein muss.

Bekannte Leitsysteme, die einem Operator Anlagenbilder mit verschiedenen Objekten mittels mehrere Operator Station Server darbieten, sind beispielsweise in der EP 3 637 205 A1 und der EP 3 736 647 A1 offenbart.

Der Erfindung liegt die Aufgabe zugrunde, ein redundant ausgelegtes Leitsystem für eine technische Anlage anzugeben, das eine verbesserte Archivierung von Daten der technischen Anlage ermöglicht.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Betreiben eines redundant ausgelegten Leitsystems für eine technische Anlage mit den Merkmalen des Anspruchs 4. Zudem wird die Aufgabe gelöst durch die Verwendung eines Leitsystems zum Betrieb einer technischen Anlage gemäß Anspruch 7. Vorteilhafte Weiterbildungen ergeben sich aus den abhängigen Ansprüchen.

Ein Leitsystem eingangs beschriebener Art ist erfindungsgemäß dadurch gekennzeichnet, dass der erste Operator Station Server und der zweite Operator Station Server dazu ausgebildet sind, kontinuierlich in festgelegten Zeitabschnitten in dem jeweiligen Datenarchiv zu hinterlegen, welchen Gesundheitszustand der jeweilige Operator Station Server beim Empfangen und Hinterlegen der Daten der technischen Anlage aufweist, und ob der jeweilige Operator Station Server in dem jeweiligen Zeitabschnitt als Master oder als Slave fungiert.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben den beiden Operator Station Servern einen Operator Station Client und beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator das Bedien- und Beobachtungssystem des Leitsystems mit den Operator Station Servern und einem ggf. vorhandenen Operator Station Client nutzen.

Bei den Daten der technischen Anlage kann es sich, im Fall einer Prozessanlage, um Prozessdaten wie Druckwerte, Temperaturwerte oder Füllstandswerte, aber beispielsweise auch um Meldungen handeln. Die Daten können Rohdaten von Sensoren darstellen. Sie können aber auch durch einen Messumformer, ein Peripheriegerät, ein Automatisierungsgerät oder eine sonstiges, hierfür ausgebildetes Gerät verarbeitet worden sein.

Die beiden redundant ausgelegten Operator Station Server des erfindungsgemäßen Leitsystems legen kontinuierlich die empfangenen Daten in einem jeweiligen Datenarchiv ab. Dabei werden die Daten in beliebigen, festgelegten Zeitabschnitten abgelegt. Dabei sind die beiden Operator Station Server in besonders vorteilhafter Weise dazu ausgebildet, in den Datenarchiven korrespondierend zu den empfangenen Daten auch einen Gesundheitszustand des jeweiligen Operator Station Servers zu hinterlegen. Die beiden Operator Station Server sind in sich bekannter Weise dazu in der Lage, ihren eigenen Gesundheitszustand (engl. "Server Health") zu ermitteln. Eine beispielhafte Offenbarung bezüglich der Weitergabe von Informationen bezüglich des Gesundheitszustandes von Servern ist der WO 2014/099906 A1 zu entnehmen. Der Gesundheitszustand kann beispielsweise auf einer Skala von 1 (ungesund) bis 6 (gesund) ausgedrückt werden.

Zusätzlich zu dem Gesundheitszustand wird für jeden Zeitabschnitt hinterlegt, ob der jeweilige Operator Station Server die Rolle eines Masters oder eines Slaves ausgeübt hat.

Durch die erfindungsgemäße Ausbildung des Leitsystems bzw. dessen Operator Station Server lassen sich die Datenarchive der beiden Operator Station Server effektiv synchronisieren, indem eine Optimierung hinsichtlich des Gesundheitszustandes und/oder der Funktion als Master/Server vorgenommen wird.

Bevorzugt ist das Leitsystem dazu ausgebildet, die beiden Datenarchive des ersten Operator Station Servers und des zweiten Operator Station Servers nach dem Ablegen der Daten, der Gesundheitsstatus und der Master/Slave Funktion derart zu synchronisieren, dass nach der Synchronisierung in beiden Datenarchiven für jeden Zeitabschnitt die Daten desjenigen Operator Station Servers hinterlegt sind, der in dem jeweiligen Zeitabschnitt den besten Gesundheitszustand aufweist. Für jeden Zeitabschnitt werden, mit anderen Worten ausgedrückt, die Daten desjenigen Operator Station Servers für die Zusammenführung der Datenarchive ausgewählt, der in dem Zeitabschnitt den höheren Gesundheitsstatus aufweist.

Eine solche Synchronisierung der beiden redundant ausgelegten Operator Station Servern ermöglicht es, die Datenarchive derart feingranular zusammenzuführen, dass in beiden Datenarchiven genau die Daten der Zeitabschnitte hinterlegt sind, die die qualitativ höherwertigen Daten bereitstellen.

Besonders bevorzugt ist das Leitsystem dazu ausgebildet, die beiden Datenarchive des ersten Operator Station Servers und des zweiten Operator Station Servers nach dem Auftreten eines Master/Master Szenarios in einem Zeitabschnitt wie zuvor erläutert zu synchronisieren. Der Begriff "Master/Master Szenario" bedeutet dabei, dass sowohl der erste Operator Station Server als auch der zweite Operator Station Server in einem (oder mehreren) Zeitabschnitten die Funktion des Masters ausgeübt haben. Dies kann beispielsweise dadurch zustande kommen, dass eine Verbindung zwischen den beiden Operator Station Servern (temporär) ausfällt und die beiden Operator Station Server in Ermangelung der Kenntnis der Funktion des jeweils anderen Operator Station Servers die Funktion des Masters übernehmen, um einen Betrieb der technischen Anlage zu aufrechtzuerhalten.

Die zuvor formulierte Aufgabe wird zudem gelöst durch ein Verfahren zum Betreiben eines redundant ausgelegten Leitsystems für eine technische Anlage, insbesondere Prozess- oder Fertigungsanlage, das einen ersten Operator Station Server und einen zweiten Operator Station Server aufweist, wobei einer dieser Operator Station Server dazu ausgebildet ist, als Master zu arbeiten und der andere dieser Operator Station Server dazu ausgebildet ist, als Slave zu arbeiten, und wobei der Slave dazu ausgebildet ist, für den Fall, dass der Master ausfällt, die Funktion des Masters zu übernehmen, und wobei auf dem ersten Operator Station Server ein erstes Datenarchiv implementiert ist, und wobei auf dem zweiten Operator Station Server ein zweite Datenarchiv implementiert ist, und wobei der erste Operator Station Server und der zweite Operator Station Server dazu ausgebildet sind, Daten der technischen Anlage zu empfangen und in dem jeweiligen Datenarchiv zu hinterlegen, und wobei der erste Operator Station Server und der zweite Operator Station Server jeweils dazu ausgebildet, einen jeweiligen Gesundheitszustand zu ermitteln.

Das Verfahren umfasst die folgenden Verfahrensschritte:
a) Kontinuierliches Empfangen von Daten der technischen Anlage und Hinterlegen der Daten in den jeweiligen Archiven, wobei die Daten in bestimmte Zeitabschnitte unterteilt werden,
b) Für jeden Zeitabschnitt jeweils Ermitteln des jeweiligen Gesundheitszustandes durch jeden der beiden Operator Station Server und, für jeden Zeitabschnitt, Zuordnen des Gesundheitszustandes des jeweiligen Operator Station Servers zu den Daten,
c) Für jeden Zeitabschnitt jeweils Hinterlegen in dem jeweiligen Datenarchiv, ob der jeweilige Operator Station Server in dem Zeitabschnitt als Master oder als Slave fungiert.

Bevorzugt werden die beiden Datenarchive des ersten Operator Station Servers und des zweiten Operator Station Servers nach dem Ablegen der Daten, der Gesundheitsstatus und der Master/Slave Funktion derart synchronisiert, dass nach der Synchronisierung in beiden Datenarchiven für jeden Zeitabschnitt die Daten desjenigen Operator Station Servers hinterlegt sind, der in dem jeweiligen Zeitabschnitt den besten Gesundheitszustand aufweist.

Besonders bevorzugt werden die beiden Datenarchive des ersten Operator Station Servers und des zweiten Operator Station Servers nach dem Auftreten eines Master/Master Szenarios in einem Zeitabschnitt wie zuvor erläutert synchronisiert.

Die zuvor erläuterte Aufgabe wird zudem durch die Verwendung eines Leitsystems zum Betrieb einer technischen Anlage, insbesondere Fertigungs- oder Prozessanlage, gelöst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 2: einen Inhalt von Datenarchiven von Operator Station Servern gemäß einem ersten Aspekt;
- FIG 3: einen Inhalt von Datenarchiven von Operator Station Servern gemäß einem zweiten Aspekt; und
- FIG 4: ein erfindungsgemäßes Leitsystem in einer Prinzipskizze.

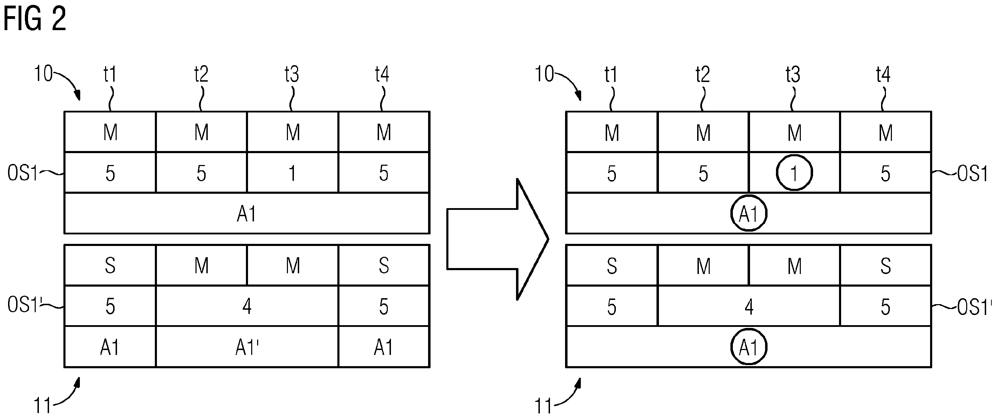

In FIG 2 ist der Inhalt eines ersten Datenarchivs 10 eines ersten Operator Station Servers OS1 und der Inhalt eines zweiten Datenarchivs 11 eines zweiten Operator Station Servers OS1' dargestellt. Die beiden Operator Station Server OS1, OS1' sind Teil eines Leitsystems für eine technische Anlage und für einen redundanten Betrieb ausgelegt.

Auf der linken Seite von FIG 2 ist der Inhalt der beiden Datenarchive 10, 11 vor einer Synchronisation der beiden Datenarchive 10, 11 dargestellt. In der ersten Zeile der Datenarchive 10, 11 ist abgebildet, ob der zugehörige Operator Station Server OS1, OS1' in dem betreffenden Zeitabschnitt t1, t2, t3, t4 als Master (M) oder als Slave (S) fungiert hat. In der zweiten Zeile ist ein Gesundheitszustand des jeweiligen Operator Station Servers OS1, OS1' dargestellt. Der Wert 5 deutet dabei auf einen Gesundheitszustand "gesund" bzw. "sehr gut" hin, der Wert 1 auf einen Gesundheitszustand "ungesund" bzw. "sehr schlecht".

In der dritten Zeile ist hinterlegt, von welchem Operator Station Server OS1, OS1' die Werte stammen, die in dem jeweiligen Datenarchiv 10, 11 hinterlegt werden. Dies ist davon abhängig, ob ein Operator Station Server OS1, OS1' als Master oder als Slave fungiert. Für das Datenarchiv 10 des ersten Operator Station Servers OS1 beispielsweise stammen alle Daten (z.B. Prozessdaten) von dem ersten Operator Station Server OS1 selbst (gekennzeichnet durch "A1"), da dieser in allen vier Zeitabschnitten als Master fungiert hat.

Der zweite Operator Station Server OS1' hat in dem ersten Zeitabschnitt t1 und in dem dritten Zeitabschnitt t3 als Slave fungiert, weshalb er hier die Daten des ersten Operator Station Servers 10 in seinem Datenarchiv 11 hinterlegt hat. In dem zweiten Zeitabschnitt t2 und in dem dritten Zeitabschnitt t3 hat er als Master fungiert, weshalb er hier seine eigenen Daten in dem zweiten Datenarchiv 11 hinterlegt hat (gekennzeichnet durch "A1'"). Es ist zu erkennen, dass beide Operator Station Server OS1, OS1' **z.B.** aufgrund eines Netzwerkausfalls in dem zweiten Zeitabschnitt t2 und dem dritten Zeitabschnitt t3 als Master fungiert haben. Dies wird als Master/Master-Szenario bezeichnet. Nach dem Wegfall des Netzwerkausfalls müssen beide Operator Station Server OS1, OS1' wieder synchronisiert werden, um einen Redundanzbetrieb wieder aufnehmen zu können.

Es ist bekannt, bei der Wiedervereinigung bzw. Synchronisierung der beiden Operator Station Server OS1, OS1' (in FIG 2 auf der rechten Seite des Pfeils dargestellt) beim Abgleich der Datenarchive 10, 11 nur die Werte des Datenarchivs 10, 11 (vollständig) übernommen (vergleiche die jeweilige dritte Zeile), das zu dem Operator Station Server OS1, OS1' gehört, der nach der Wiedervereinigung als Master hervorgeht. Im vorliegenden Beispiel ist dies der erste Operator Station Server OS1. Es ist zu erkennen, dass in beiden Datenarchiven 10, 11 für den dritten Zeitabschnitt t3 die Werte des ersten Operator Station Servers OS1, OS1' übernommen werden, obwohl der erste Operator Station Server OS1 in dem Zeitabschnitt t3 einen sehr schlechten Gesundheitszustand (Wert 1) aufweist. Die übernommen Daten sind daher von potenziell schlechter Güte. Die qualitativ hochwertigeren Daten von dem zweiten Operator Station Server OS1' werden verworfen.

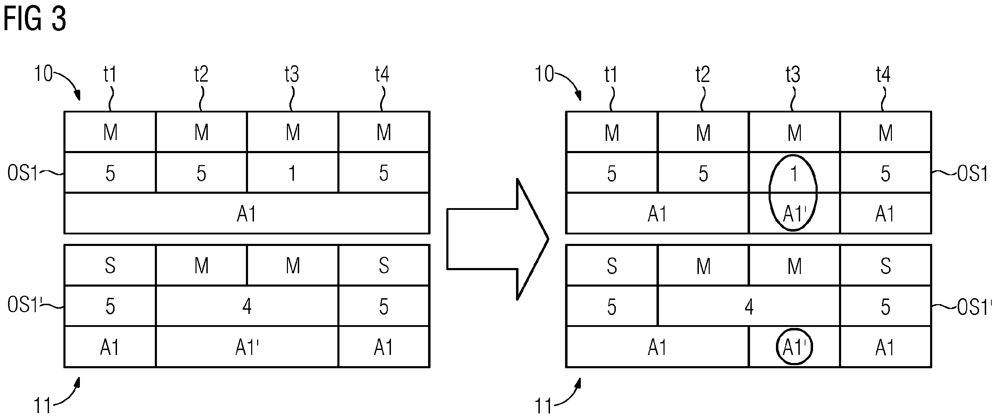

In FIG 3 sind zwei Datenarchive 10, 11 von Operator Station Servern OS1, OS1' dargestellt, die Teil eines erfindungsgemäßen Leitsystems sind. Im Gegensatz zu dem in FIG 2 erläuterten, bekannten Verfahren wird bei der Darstellung in FIG 3 verdeutlicht, dass bei der Synchronisierung der Operator Station Server OS1, OS1' der jeweilige Gesundheitszustand (zweite Zeile) und die Funktion als Master bzw. Slave (dritte Zeile) berücksichtigt werden.

Die überlappende Masterfunktion Master/Master im zweiten Zeitabschnitt t2 löst eine Synchronisierung der beiden Datenarchive 10, 11 aus. Im dritten Zeitabschnitt t3, in dem der erste Operator Station Server OS1 einen sehr schlechten Gesundheitszustand aufweist, werden bei der Synchronisation die (Prozess-)Werte für beide Datenarchive 10, 11 übernommen (symbolisiert durch A1'), die der zweite, gesunde Operator Station Server OS1' in dem Zeitabschnitt t3 empfangen hat.

Durch diese Ausgestaltung des Leitsystems bzw. durch dieses Verfahren zum Betrieb einer technischen Anlage kann effizient vermieden werden, dass potenziell Werte verloren gehen, die eine höhere Güte aufweisen.

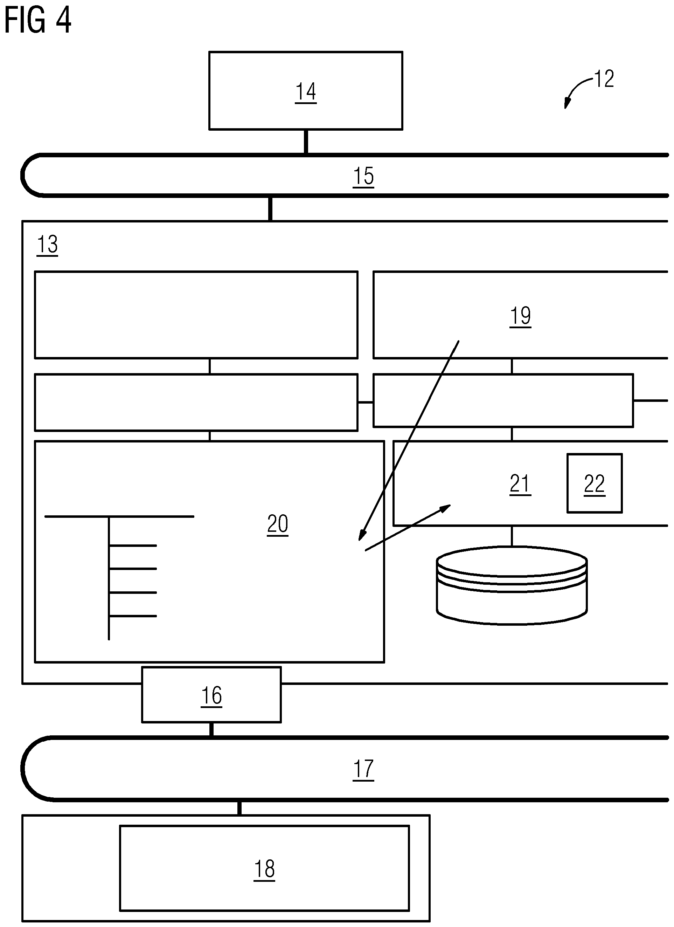

In FIG 4 ist ein Teil eines erfindungsgemäßen Leitsystems 12 einer als Prozessanlage, d.h. als verfahrenstechnische Anlage, ausgebildeten technischen Anlage dargestellt. Das Leitsystem 12 umfasst einen ersten Operator Station Server 13, einen zweiten Operator Station Server (nicht dargestellt) und einen Operator Station Client 14.

Der erste Operator Station Server 13, der zweite Operator Station Server und der Operator Station Client 14 sind über einen Terminalbus 15 miteinander und optional mit nicht dargestellten weiteren Komponenten des Leitsystems 12 wie einem Engineering Station Server verbunden.

Ein Benutzer bzw. Operator kann zum Zwecke des Bedienens und Beobachtens über den Operator Station Client 14 mittels des Terminalbus 15 auf die Operator Station Server 13 zugreifen. Der Terminalbus 15 kann, ohne sich darauf zu beschränken, beispielsweise als Industrial Ethernet ausgebildet sein.

Die beiden Operator Station Server 13, 14 sind identisch aufgebaut, weshalb in FIG 4 nur auf den Aufbau des ersten Operator Station Servers 13 eingegangen wird (im Folgenden nur als "Operator Station Server 13" bezeichnet). Der Operator Station Server 13 weist eine Geräteschnittstelle 16 auf, die mit einem Anlagenbus 17 verbunden ist. Über diese Geräteschnittstelle 16 kann der Operator Station Server 13 mit einem Automatisierungsgerät 18 sowie mit optional vorhandenen weiteren Komponenten der Prozessanlage wie Peripheriegeräten (nicht dargestellt) kommunizieren. Der Anlagenbus 17 kann, ohne sich darauf zu beschränken, beispielsweise als Industrial Ethernet ausgebildet sein. Das Automatisierungsgerät 18 kann mit einer beliebigen Anzahl an Subsystemen (nicht dargestellt) verbunden sein.

Auf dem Operator Station Server 13 sind (unter anderem) ein Redundanzdienst 19, ein Prozessabbild 20 und ein Datenarchiv 21 implementiert. Der Operator Station Client 14 ist dazu ausgebildet, Anlagenbild zum Bedienen und Beobachten der Prozessanlage darzustellen, worauf hier aber nicht weiter eingegangen wird.

Das Automatisierungsgerät 18 ist dazu ausgebildet, eine Automatisierung der Prozessanlage zu steuern und zu überwachen. Hierzu ist auf dem Automatisierungsgerät 18 ein Steuerprogramm implementiert, welches im Rahmen einer Projektierung der Automatisierung der Prozessanlage auf das Automatisierungsgerät 18 geladen worden ist. Das Automatisierungsgerät 18 empfängt Prozessdaten aus der Prozessanlage und überträgt diese an das Prozessabbild 20 des Operator Station Servers 13.

Der Redundanzdienst 19 ermittelt in an sich bekannter Weise einen Gesundheitszustand (Health Index) des Operator Station Servers 13, hinterlegt diesen im Prozessabbild 20 des Operator Station Servers 13 und archiviert ihn im Datenarchiv 21. So steht der Gesundheitszustand nach dem Beenden eines Master/Master Szenarios der beiden redundant ausgelegten Operator Station Server 13 bei der Zusammenführung / Synchronisierung der Datenarchive 21 zur Verfügung. Darüber hinaus werden die Funktionen, die der Operator Station Server 13 in einem bestimmten Zeitabschnitt ausgeübt hat, als "Server States" (Master / Slave) im Prozessabbild 20 abgelegt und in dem Datenarchiv 21 archiviert, um den Zeitraum für ein Master/Master Szenario (OS1=M, OS1'=M) exakt lokalisieren zu können.

Anhand der archivierten Gesundheitszustände und der Funktionen der einzelnen Operator Station Server 13 führt ein Zusammenführungsdienst in den Datenarchiven 21 der beiden Operator Station Server 13 das anhand FIG 3 erläuterte Verfahren durch. Nach dem Abgleich der Datenarchive 21 ist der Inhalt der beiden Datenarchive 21, wie in FIG 3 dargestellt, wieder identisch. Ab diesem Moment kann eine Übertragung der Daten der beiden Datenarchive 21 in ein Zentralarchiv (nicht dargestellt) des Leitsystems 12erfolgen, um eine Langzeitarchivierung der Daten vorzunehmen. Sollten schon zuvor Inhalte der (lokalen) Datenarchive 21 an das Zentralarchiv übertragen worden sein, können diese nach dem Abgleich der (lokalen) Datenarchive 21 auch verworfen werden.

Insgesamt ist durch das erfindungsgemäße Leitsystem 12 bzw. das damit einhergehende Verfahren ein feingranularer Abgleich der Datenarchive 21 mit den bestmöglichen Prozessdaten möglich. Durch die Erfindung kann ein Beitrag für eine höhere Verlässlichkeit und eine verbesserte Bedienbarkeit des Leitsystems der technischen Anlage geleistet werden.

## Patentansprüche

1. Leitsystem (12) für eine technische Anlage, insbesondere Prozess- oder Fertigungsanlage, das einen ersten Operator Station Server (13) und einen zweiten Operator Station Server aufweist, wobei einer dieser Operator Station Server (13) dazu ausgebildet ist, als Master zu arbeiten und der andere dieser Operator Station Server (13) dazu ausgebildet ist, als Slave zu arbeiten, und wobei der Slave dazu ausgebildet ist, für den Fall, dass der Master ausfällt, die Funktion des Masters zu übernehmen,
**dadurch gekennzeichnet, dass**
auf dem ersten Operator Station Server (13) ein erstes Datenarchiv (21) implementiert ist, und auf dem zweiten Operator Station Server ein zweites Datenarchiv implementiert ist,
der erste Operator Station Server (13) und der zweite Operator Station Server dazu ausgebildet sind, Daten der technischen Anlage zu empfangen und in dem jeweiligen Datenarchiv (21) zu hinterlegen,
der erste Operator Station Server (13) und der zweite Operator Station Server jeweils dazu ausgebildet sind, einen jeweiligen eigenen Gesundheitszustand zu ermitteln, und
der erste Operator Station Server (13) und der zweite Operator Station Server dazu ausgebildet sind, kontinuierlich in festgelegten Zeitabschnitten (t1, t2, t3, t4, t5, t6) in dem jeweiligen Datenarchiv (21) zu hinterlegen, welchen eigenen Gesundheitszustand der jeweilige Operator Station Server (13) beim Empfangen und Hinterlegen der Daten der technischen Anlage aufweist, und ob der jeweilige Operator Station Server (13) in dem jeweiligen Zeitabschnitt (t1, t2, t3, t4, t5, t6) als Master oder als Slave fungiert.

2. Leitsystem (1) nach Anspruch 1, bei dem das Leitsystem (12) dazu ausgebildet ist, die beiden Datenarchive (21) des ersten Operator Station Servers (13) und des zweiten Operator Station Servers nach dem Ablegen der Daten, des Gesundheitszustandes und der Master/Slave Funktion derart zu synchronisieren, dass nach der Synchronisierung in beiden Datenarchiven (21) für jeden Zeitabschnitt die Daten desjenigen Operator Station Servers (13) hinterlegt sind, der in dem jeweiligen Zeitabschnitt (t1, t2, t3, t4, t5, t6) den besten Gesundheitszustand aufweist.

3. Leitsystem (12) nach Anspruch 2, bei dem das Leitsystem (12) dazu ausgebildet ist, die beiden Datenarchive (21) des ersten Operator Station Servers (13) und des zweiten Operator Station Servers nach dem Auftreten eines Master/Master Szenarios in einem Zeitabschnitt (t1, t2, t3, t4, t5, t6) gemäß Anspruch 2 zu synchronisieren.

4. Verfahren zum Betreiben eines redundant ausgelegten Leitsystems (12) für eine technische Anlage, insbesondere Prozess- oder Fertigungsanlage, das einen ersten Operator Station Server (13) und einen zweiten Operator Station Server aufweist, wobei einer dieser Operator Station Server (13) dazu ausgebildet ist, als Master zu arbeiten und der andere dieser Operator Station Server (13) dazu ausgebildet ist, als Slave zu arbeiten, und wobei der Slave dazu ausgebildet ist, für den Fall, dass der Master ausfällt, die Funktion des Masters zu übernehmen,
und wobei auf dem ersten Operator Station Server (13) ein erstes Datenarchiv (21) implementiert ist, und wobei auf dem zweiten Operator Station Server ein zweites Datenarchiv implementiert ist,
und wobei der erste Operator Station Server (13) und der zweite Operator Station Server dazu ausgebildet sind, Daten der technischen Anlage zu empfangen und in dem jeweiligen Datenarchiv (21) zu hinterlegen,
und wobei der erste Operator Station Server (13) und der zweite Operator Station Server jeweils dazu ausgebildet, einen jeweiligen eigenen Gesundheitszustand zu ermitteln,
das Verfahren umfassend:
a) Kontinuierliches Empfangen von Daten der technischen Anlage und Hinterlegen der Daten in den jeweiligen Datenarchiven (21), wobei die Daten in bestimmte Zeitabschnitte (t1, t2, t3, t4, t5, t6) unterteilt werden,
b) Für jeden Zeitabschnitt (t1, t2, t3, t4, t5, t6) jeweils Ermitteln des jeweiligen Gesundheitszustandes durch jeden der beiden Operator Station Server (13) und, für jeden Zeitabschnitt (t1, t2, t3, t4, t5, t6), Zuordnen des eigenen Gesundheitszustandes des jeweiligen Operator Station Servers (13) zu den Daten,
c) Für jeden Zeitabschnitt (t1, t2, t3, t4, t5, t6) jeweils Hinterlegen in dem jeweiligen Datenarchiv (21), ob der jeweilige Operator Station Server (13) in dem Zeitabschnitt als Master oder als Slave fungiert.

5. Verfahren nach Anspruch 4, bei dem die Datenarchive (21) des ersten Operator Station Servers (13) und des zweiten Operator Station Servers nach dem Ablegen der Daten, der Gesundheitsstatus und der Master/Slave Funktion derart synchronisiert werden, dass nach der Synchronisierung in beiden Datenarchiven (21) für jeden Zeitabschnitt (t1, t2, t3, t4, t5, t6) die Daten desjenigen Operator Station Servers (13) hinterlegt sind, der in dem jeweiligen Zeitabschnitt (t1, t2, t3, t4, t5, t6) den besten Gesundheitszustand aufweist.

6. Verfahren nach Anspruch 5, bei dem die Datenarchive (21) des ersten Operator Station Servers (13) und des zweiten Operator Station Servers nach dem Auftreten eines Master/Master Szenarios in einem Zeitabschnitt (t1, t2, t3, t4, t5, t6) gemäß Anspruch 5 synchronisiert werden.

7. Verwendung eines Leitsystems (12) nach einem der Ansprüche 1 bis 3 zum Betrieb einer technischen Anlage, insbesondere Fertigungs- oder Prozessanlage.

## Claims

1. Control system (12) for a technical installation, in particular process or manufacturing installation, which has a first operator station server (13) and a second operator station server, wherein one of these operator station servers (13) is embodied to operate as master and the other of these operator station servers (13) is embodied to operate as slave, and wherein the slave is embodied to inherit the function of master in the event that the master fails,
**characterised in that**
a first data archive (21) is implemented on the first operator station server (13), and a second data archive is implemented on the second operator station server,
the first operator station server (13) and the second operator station server are embodied to receive data of the technical installation and to record it in the respective data archive (21),
the first operator station server (13) and the second operator station server are in each case embodied to ascertain a respective health state, and
the first operator station server (13) and the second operator station server are embodied to continuously record in the respective data archive (21), at specified time intervals (t1, t2, t3, t4, t5, t6), which inherent health state the respective operator station server (13) has when receiving and recording the data of the technical installation, and whether the respective operator station server (13) acts as master or as slave in the respective time interval (t1, t2, t3, t4, t5, t6).

2. Control system (1) according to claim 1, in which the control system (12) is embodied to synchronise the two data archives (21) of the first operator station server (13) and the second operator station server following the storing of the data, the health state and the master/slave function in such a manner that, following the synchronisation in both data archives (21), for each time interval the data of the operator station server (13) that has the best health state in the respective time interval (t1, t2, t3, t4, t5, t6) is recorded.

3. Control system (12) according to claim 2, in which the control system (12) is embodied to synchronise the two data archives (21) of the first operator station server (13) and the second operator station server, following the occurrence of a master/master scenario in a time interval (t1, t2, t3, t4, t5, t6), according to claim 2.

4. Method for operating a control system (12) designed with redundancy for a technical installation, in particular process or manufacturing installation, which has a first operator station server (13) and a second operator station server, wherein one of these operator station servers (13) is embodied to operate as master and the other of these operator station servers (13) is embodied to operate as slave, and wherein the slave is embodied to inherit the function of master in the event that the master fails,
and wherein a first data archive (21) is implemented on the first operator station server (13), and wherein a second data archive is implemented on the second operator station server, and wherein the first operator station server (13) and the second operator station server are embodied to receive data of the technical installation and to record it in the respective data archive (21),
and wherein the first operator station server (13) and the second operator station server are in each case embodied to ascertain a respective inherent health state,
the method comprising:
a) continuously receiving data of the technical installation and recording the data in the respective data archives (21), wherein the data is divided into certain time intervals (t1, t2, t3, t4, t5, t6),
b) for each time interval (t1, t2, t3, t4, t5, t6), in each case ascertaining the respective health state by way of each of the two operator station servers (13) and, for each time interval (t1, t2, t3, t4, t5, t6), assigning the inherent health state of the respective operator station server (13) to the data,
c) for each time interval (t1, t2, t3, t4, t5, t6), in each case recording in the respective data archive (21) whether the respective operator station server (13) acts as master or as slave in the time interval.

5. Method according to claim 4, in which the data archives (21) of the first operator station server (13) and the second operator station server, following the storing of the data, the health state and the master/slave function, are synchronised in such a manner that, following the synchronisation in both data archives (21), for each time interval (t1, t2, t3, t4, t5, t6) the data of the operator station server (13) that has the best health state in the respective time interval (t1, t2, t3, t4, t5, t6) is recorded.

6. Method according to claim 5, in which the data archives (21) of the first operator station server (13) and the second operator station server, following the occurrence of a master/master scenario in a time interval (t1, t2, t3, t4, t5, t6), are synchronised according to claim 5.

7. Use of a control system (12) according to one of claims 1 to 3 for operation of a technical installation, in particular manufacturing or process installation.

## Revendications

1. Système (12) de conduite d'une installation technique, en particulier d'une installation de processus ou de fabrication, qui a un premier operator station server (13) et un deuxième operator station server, dans lequel l'un de ces operator station server (13) est constitué pour travailler en maître et l'autre de ces operator station server (13) est constitué pour travailler en esclave, et dans lequel l'esclave est constitué pour prendre la fonction du maître, dans le cas où le maître est défaillant,
**caractérisé en ce qu'**
une première archive (21) de données est mise en œuvre sur le premier operator station server (13) et une deuxième archive de données est mise en œuvre sur le deuxième operator station server,
le premier operator station server (13) et le deuxième operator station server sont constitués pour recevoir des données de l'installation technique et pour les mettre dans l'archive (21) de données respective,
le premier operator station server (13) et le deuxième operator station server sont constitués chacun leur propre état de santé respectif, et
le premier operator station server (13) et le deuxième operator station server sont constitués pour mettre en continu dans des laps (t1, t2, t3, t4, t5, t6) de temps dans l'archive (21) de données respective le propre état de santé qu'a l'operator station server (13) à la réception et à la mise en mémoire des données de l'installation technique et si l'operator station server (13) respectif sert de maître ou d'esclave dans le laps (t1, t2, t3, t4, t5, t6) de temps respectif.

2. Système (1) de conduite suivant la revendication 1, dans lequel le système (12) de conduite est constitué pour synchroniser les deux archives (21) de données du premier operator station server (13) et du deuxième operator station server après le dépôt des données de l'état de santé et de la fonction maître/esclave de manière à ce que, après la synchronisation, soient mises, dans les deux archives (21) de données pour chaque laps de temps, les données de l'operator station server (13), qui a, dans le laps (t1, t2, t3, t4, t5, t6) de temps respectif, le meilleur état de santé.

3. Système (12) de conduite suivant la revendication 2, dans lequel le système (12) de conduite est constitué pour synchroniser, suivant la revendication 2, les deux archives (21) de données du premier operator station server (13) et du deuxième operator station server, après l'apparition d'un scénario maître/maître dans le laps (t1, t2, t3, t4, t5, t6) de temps.

4. Procédé pour faire fonctionner un système (12) conçu de manière redondante de conduite d'une installation technique, en particulier d'une installation de processus ou de fabrication, qui a un premier operator station server (13) et un deuxième operator station server, dans lequel l'un de ces operator station server (13) est constitué pour travailler en maître et l'autre de ces operator station server (13) est constitué pour travailler en esclave, et dans lequel l'esclave est constitué, pour prendre en charge la fonction du maître, dans le cas où le maître est défaillant,
et dans lequel une première archive (21) de données est mise en œuvre sur le premier operator station server (13), et dans lequel une deuxième archive de données est mise en œuvre sur le deuxième operator station server,
et dans lequel le premier operator station server (13) et le deuxième operator station server sont constitués pour recevoir des données de l'installation technique et les mettre dans l'archive (21) de données respective,
et dans lequel le premier operator station server (13) et le deuxième operator station server sont constitués chacun pour déterminer leur propre état de santé,
le procédé comprenant :
a) recevoir continuellement des données de l'installation technique et mettre les données dans les archives (21) de données respectives, dans lequel les données sont subdivisées dans des laps (t1, t2, t3, t4, t5, t6) de temps déterminés,
b) pour chaque laps (t1, t2, t3, t4, t5, t6) de temps, déterminer respectivement l'état de santé respective par chacun des deux operator station server (13) et, pour chaque laps (t1, t2, t3, t4, t5, t6) de temps, associer l'état de santé propre de l'operator station server (13) respectif aux données,
c) pour chaque laps (t1, t2, t3, t4, t5, t6) de temps, mettre respectivement dans l'archive (21) de données respective, si l'operator station server (13) respectif fonctionne comme maître ou comme esclave dans le laps de temps.

5. Procédé suivant la revendication 4, dans lequel on synchronise les archives (21) de données du premier operator station server (13) et du deuxième operator station server après l'archivage des données de l'état de santé et de la fonction maître/esclave, de manière à ce que, après la synchronisation, soient mises, dans les deux archives (21) de données pour chaque laps (t1, t2, t3, t4, t5, t6) de temps, les données de l'operator station server (13), qui a, dans le laps (t1, t2, t3, t4, t5, t6) de temps respectif, l'état de santé le meilleur.

6. Procédé suivant la revendication 5, dans lequel on synchronise, suivant la revendication 5, les archives (21) de données du premier operator station server (13) et du deuxième operator station server après l'apparition d'un scénario maître/maître dans un laps (t1, t2, t3, t4, t5, t6) de temps.

7. Utilisation d'un système (12) de conduite suivant l'une des revendications 1 à 3 pour faire fonctionner une installation technique, en particulier une installation de fabrication ou de processus.
